# EUROPEAN PATENT APPLICATION

(11) **EP 4 261 966 A1**
(43) Date of publication of application: **18.10.2023**
(21) Application number: 22168000.2
(22) Date of filing: 12.04.2022
(51) Int. Cl.: H01M 10/04, H01M 10/613, H01M 10/6551, H01M 10/6553, H01M 10/6555, H01M 10/658, H01M 50/211, H01M 50/24, H01M 50/264, H01M 50/28, H01M 50/519, H01M 10/647

(54) **BATTERY CELL MODULE AND ARRANGEMENT**

(71) Applicant: Volocopter GmbH, 76646 Bruchsal (DE)
(72) Inventor: Gutierrez, Pablo, 69115 Heidelberg (DE)
(74) Representative: LBP Lemcke, Brommer & Partner Patentanwälte mbB

(57) **Abstract**

We propose a battery cell module (10), comprising:
a plurality of flat battery cells (1) arranged side by side in a stack;
a layer of a compressible aerogel (17) between al least two of said battery cells (1);
at least one layer of phase change material (18), PCM;
a circuit arrangement with battery cell management electronics (14a) in operative connection with said plurality of battery cells (1);
at least two compression plates (11) arranged on opposite sides of said stack;
compression means (12) operable in a cell compression direction (CD) for to hold said stack together between said compression plates (11); and
a separation layer (19) arranged between said stack and said circuit arrangement.

## Description

This invention relates to a battery cell module according to claim 1 and to a battery cell arrangement comprising a plurality of such battery cell modules according to claim 14.

Prior art document EP 2 759 019 B1 describes that (battery) cells in a battery may fail in the form of an exothermal process called thermal runaway. A thermal runaway process in a battery cell may be caused by manufacturing defects, mishandling or abuse of cells or any factor that raises a cell's temperature, or exposes the cell to high temperatures from an external source. Such high temperatures often cause an increase in reaction rates in the cells, thereby causing a further increase in their temperature and therefore a further increase in the reaction rate. As a result of this so-called thermal runaway process, cells in a battery release a large amount of heat and/or gas into areas surrounding the cells.

Multiple battery cells are often needed to reach higher voltages and store sufficient energy to make the battery effective for its intended use. Since cells of a battery are often packed closely together, if one cell in a part of an assembly or arrangement of cells experiences thermal runaway, the high temperature of that failed cell can trigger thermal runaway of nearby cells. Such a process may cause the nearby cells to release heat and propagate the thermal runaway process throughout the remaining cells in the battery, causing a cascading failure of the battery and releasing a large amount of energy and/or gases from inside the battery cells.

In order to reduce the risk of cascading thermal runaway, EP 2 759 019 B1 proposes a battery comprising a plurality of battery cells arranged in a column, which has an alternating series of first cells and second cells. The proposed battery further comprises a first thermal bus having flanges, each flange for contacting one of the first cells; and a second thermal bus having flanges, each flange for contacting one of the second cells. The second thermal bus does not contact the first thermal bus, and a single insulator is in contact with each cell and preventing direct physical contact between each first cell and an adjacent second cell. Such battery design suffers, inter alia, from poor use of space and thus a relatively low power to weight ratio, which is of disadvantage in particular for aeronautical uses.

There is a need to devise a further improved battery, which battery makes better use of space, thus leading to an improved power to weight ratio, which is crucial in particular for aeronautical uses (preferably as power cells for electric aircraft propulsion units), whereby the thermal runaway avoidance characteristics are at least maintained, if not improved as well.

This object is achieved by means of a battery cell module with the features of appended claim 1 and by means of a battery cell arrangement with the features of appended claim 14.

Advantageous further embodiments are defined in the respective sub-claims.

A battery cell module according to the invention comprises: a plurality of flat battery cells arranged side by side in a stack; a layer of a compressible aerogel between al least two of said battery cells; at least one layer of phase change material, PCM; a circuit arrangement with battery cell management electronics in operative connection with said plurality of battery cells; at least two compression plates arranged on opposite sides of said stack; compression means operable in a cell compression direction for to hold the stack together between said compression plates; and a separation layer arranged between said stack and said circuit arrangement.

Said compression means enable a tight packing of the battery cells, thus improving the use of space. The PCM can absorb heat generated during a thermal runaway of a given battery cell, thus protecting the other battery cells. The compressible aerogel provides heat transfer resistance and allows for battery cell compression and expansion during thermal events, while being almost negligible with respect to a total weight of the module. This leads to an improved battery cell module.

According to the IUPAC definition, an aerogel is a gel comprising a microporous solid in which the dispersed phase is a gas, not a liquid.

Here and in the following, a phase change material (PCM) is a substance which releases/absorbs a relatively large amount of energy at phase transitions in order to provide useful heat/cooling. Generally, the transition will be from one of the first two fundamental states of matter. i.e., solid and liquid, to the other. The phase transition may also be between non-classical states of matter, such as the conformity of crystals, where the material goes from conforming to one crystalline structure to conforming to another, which may be a higher or lower energy state.

A battery cell arrangement or assembly according to the invention comprises a plurality of battery cell modules as defined above. This leads to an improved battery cell arrangement.

In an embodiment of the battery cell module according to the invention, there is a limited number, n, of battery cells within said battery cell module, preferably n <= 20, more preferably n <= 15, most preferably n = 10.

In this way, one can establish a safe number of propagating cells (e.g., 20 % (rounded up) of the total number of battery cells in a given module) in an isolated module and create a pack with a minimum number of cells that are likely to be subject to simultaneous trigger events that can lead to high energy release (gas, fire, etc.), while inherently minimizing the likelihood of propagation.

Breakdown thermal runaway triggering and propagation scenarios can establish a likelihood of runaway propagation. We select a configuration that is most beneficial and allows the greatest number of cells to be packed per module while reducing the mass needed to thermally and mechanically contain the resulting loads from a thermal event and from environmental conditions.

In an embodiment of the battery cell module according to the invention, said battery cells are devised as pouch cells. Such battery cells can be stacked easily and can thus optimize the use of space.

In an embodiment of the battery cell module according to the invention, two layers of aerogel are located between every pair of battery cells, preferably one additional layer of aerogel being located between an outmost cell in said stack and an adjacent compression plate.

This provides enhanced heat transfer resistance between pairs of battery cells while improving the possibility for battery cell compression and expansion.

In an embodiment of the battery cell module according to the invention, the compression plates are held together by compression rods, preferably at least two compression rods on each side of the stack.

This provides an easy and lightweight way of mechanically holding together the battery cells in a given stack.

In order to protect the battery cells from external impact, in an embodiment of the battery cell module according to the invention said compression plates have angled edges with which they at least partly enclose the battery cells laterally. Furthermore, said angled edges can be used to accommodate all the necessary fasteners to assemble the different components of the battery cell modules as described herein.

In another embodiment of the battery cell module according to the invention, a layer of PCM is arranged between every pair of battery cells, preferably between the two layers of aerogel mentioned above, preferably one additional layer of PCM being located between an outmost battery cell and an adjacent compression plate, most preferably outside of any aerogel layer.

Such embodiment allows for improved heat absorption due to the presence and location of multiple layers of PCM.

In yet another embodiment of the battery cell module according to the invention, said circuit arrangement, which preferably comprises a printed circuit board, PCB, is located outside said stack, preferably in a plane parallel to said compression direction.

Such type of circuit arrangement can be easily handled. Due to its location outside the battery cell stack, it can be protected from heat generated during thermal runaway. Preferably, the circuit arrangement has at least two different connecting directions in order to allow for connecting the module's battery cells either in series or in parallel with the battery cells from other modules.

In a further embodiment of the battery cell module according to the invention, said separation layer comprises a layer of thermo-mechanical insulation between said stack and said circuit arrangement, preferably in the form of a sandwiched electrically non-conductive panel (e.g., woven ceramic) including an insulating material (e.g., an aerogel) encapsulating a PCM layer, which PCM layer can absorb high temperature residual heat.

Such embodiment has proved useful since it provides both thermal and mechanical protection, in particular to said circuit arrangement (e.g., PCB and electronics).

In a highly advantageous embodiment of the battery cell module according to the invention, said separation layer has through-holes through which pass cell tabs, which cell tabs operatively (i.e., electrically) connect respective battery cells with the circuit arrangement. The separation layer is preferably coated with a fire barrier coating.

In this way, the separation layer can fulfil its intended use while allowing electrical signals to pass through without impairing the thermal and/or mechanical protection.

Said separation layer can be used to create a firewall that separates the electronics from the cell chamber (i.e., an interior of the cell module, the so-called fire zone) while allowing the cell tabs to pass through either via a groove (i.e., a through-hole) or an insert.

In another highly advantageous embodiment of the battery cell module according to the invention, said cell tabs are flexible to allow for battery cell expansion without tearing or shearing off any electrical contacts during expansion.

In another embodiment of the battery cell module according to the invention, a PCM layer is arranged in or on said separation layer, in contact with said cell tabs.

This (additional) PCM layer can efficiently protect the circuit arrangement (i.e., the electronics) from excess heat.

Applicant has found that preferably, in yet another embodiment of the battery cell module according to the invention, said phase change material has two phase change temperatures, one being used for (operating at) low temperatures, preferably around 55°C, and another for (i.e., operating at) high temperatures, preferably around 100°C. During normal operation, the low temperature phase change is triggered for cooling the battery cells and for keeping the cells within their operational limits, preferably through said tabs, thus avoiding that they reach critical temperatures. During a thermal runaway event, the second phase change is triggered for absorbing any residual heat from (a) triggered cell(s), thus preventing the heat to be transmitted to a neighbouring cell or to the surrounding structure.

The first phase change material, which is used for operating at low temperatures, e.g., temperatures around 55°C, can be composed of custom wax encapsulated in a resin matrix. The second phase change material, which is operating at higher temperatures, e.g., around 100°C, can be of water crystals encapsulated in a resin matrix.

In this way, one can combine a thermal runaway residual heat dissipation function with a cooling mass needed to prevent the battery cells from reaching high temperatures during operation by using double latent heat phase change materials, preferably on either side of a given battery cell and/or in connection with the cell tabs.

In yet another highly advantageous embodiment of the battery cell module according to the invention, a lid is located outside said stack, preferably in a plane parallel to said compression direction, more preferably opposite said circuit arrangement mentioned earlier, said lid having a plurality of holes. These holes allow gases that may be produced during thermal runaway to be evacuated from the cell module. Said lid can be part of an individual module, or it can be devised to span and cover a plurality of modules in the claimed battery cell arrangement.

In this context and in another embodiment of the battery cell module according to the invention, an outer surface of said lid is covered with a film, preferably a GFRP (glass fibre reinforced polymer) film. Such film allows for a dioded (i.e., single direction) low pressure burst function which helps to evacuate gases from the cell module.

Further in this context and in another embodiment of the battery cell module according to the invention, said film is bonded on respective outermost edges of said lid. This, in consequence, leaves a large unsupported surface of the film, which is located in the middle of the film cover, when pressure is being built up inside the cell module, thus reducing the pressure required for activating said burst function.

Alternatively, small portions of film could be bonded individually on respective edges surrounding the lid holes.

These measures can advantageously help to maximize the venting area by introducing holes on a full module face, which holes may be covered on one side by a membrane supported at the edges of the module face in order to allow bursting in only one direction.

Still further in this context and in yet another embodiment of the battery cell module according to the invention, said lid, in a cross-section thereof, has bi-directional corrugated channels that extend between said holes, preferably V-shaped channels, and thus forms a venting surface. These channels serve to geometrically reinforce the structure while allowing gases to pass through for evacuation.

Such use of bi-directional corrugated beam elements on the venting surface can help to increase structural inertia while allowing gasses to go through and be evacuated.

In the present context, "bi-directional" means that said channels extend in two different directions, which directions are preferably mutually perpendicular.

Even further in this context and in still another embodiment of the battery cell module according to the invention, an inner wall of the lid is surface-coated with fire-resistant coating to keep high strength retention on the structure. This helps to improve the overall fire resistance of the cell module.

In another embodiment of the battery cell module according to the invention, said module is packed by using the separation layer, preferably the thermo-mechanical insulation layer mentioned above, and the compression plates, such that said compression plates compress the battery cells and said separation layer by means of said compression rods. As stated before, the compression plates may also serve as a casing in order to protect the battery cells from the open environment and from neighbouring cell modules. This may be important when using battery cells in the form of pouch cells. Pouch cells require compression to operate as otherwise they might delaminate and/or deteriorate faster.

By packing the battery cells and corresponding electronics in a (mini-)module or cell module, one can devise a building block that allows for generating different battery configurations which can be fit in different vehicle architectures.

In an embodiment of the battery cell arrangement according to the invention, said battery cell modules are arranged in a planar configuration of rows and columns, wherein in every row said battery cell modules are in contact with an adjacent module via a respective compression plate, and wherein adjacent rows are separated from each other by an intermodule wall, preferably of H-shape, with outside rows being separated from the exterior by respective sidewalls, preferably of U-shape.

This enables a stable and space saving assembly of the battery cells (i.e., the battery cell modules).

In another embodiment of the battery cell arrangement according to the invention, a cooling plate is arranged at least on one side parallel to a plane of said rows and columns, preferably in contact with said circuit arrangement and/or said PCM. Such cooling plate can further enhance the thermal resistance of the arrangement.

Applicant has found that good results can be achieved if, in another embodiment of the battery cell arrangement according to the invention, said modules are electrically connected in series perpendicular to said cell compression direction. However, the application is not limited to such embodiment; connecting the battery cells differently can be advantageous in certain circumstances.

Preferably, in yet another embodiment of the battery cell arrangement according to the invention, said arrangement is enclosed and held in place by the lid as mentioned earlier, said sidewalls, said intermodule walls and said cooling plate via adhesive and/or detachable connectors, e.g., screws.

In this way, the battery cells are protected from external influences while heat and/or gases can be evacuated in the event of thermal runaway.

Preferably, only the compression plates are used to pack the battery cells in the respective cell modules while sidewalls, intermodule walls, lid and cooling plate are used to arrange a plurality of cell modules in one single pack (battery cell arrangement or assembly).

Highly preferably, the cell modules in the arrangement are packed in any preferred sequence of parallel and series connections, considering that the circuit arrangement (e.g., the PCB) mentioned earlier may allow for power and signal electronics to be connected in both (parallel and series) directions.

For instance, one possibility is to connect the cell modules in a 10S4P (10 in series and 4 in parallel) configuration at module level (or 100S4P at individual battery cell level, if there are 10 battery cells in a given cell module). This is not limiting; any other configuration could be realised instead.

In another preferred embodiment, burstable anti flame return sleeves are provided for enclosing the battery cells. Said sleeves can be glued on the edges of each of the battery cells. When the pressure increases within a given battery cell, the glued edge of the sleeves will break, allowing gases and flames to escape to the outside. In case that fire and/or hot gases hit the inner walls of a given battery cell module and bounce back to neighbouring battery cells, the sleeves shall avoid the fire to reach said neighbouring cells. Hence, it is highly preferred to make said sleeves burstable only in one direction, that is from an inside to an outside (relative to a given battery cell). Thermal runaway clearance can advantageously be provided for easy degassing of any accumulated hot gases or fire thus, avoiding excessive impact on other neighbouring components.

Further characteristics and advantageous of the invention can be gathered from the following description of preferred and non-limiting embodiments with reference to the drawings.
Figure 1 shows considerations for reducing the risk of cascading thermal runaway by reducing the number of battery cells (or simply "cells") in a module;
Figure 2 shows a sectional view of the basic structure of a battery cell module;
Figure 3 shows the lid comprised in Figure 2;
Figure 4 shows a battery cell arrangement composed of a plurality of cell modules assembled in a planar configuration of rows and columns;
Figure 5 shows the basic structure of a single battery cell module in an exploded view;
Figure 6 shows a single battery cell module in another representation with a view of its underside; and
Figure 7 shows a battery cell arrangement in an exploded view.

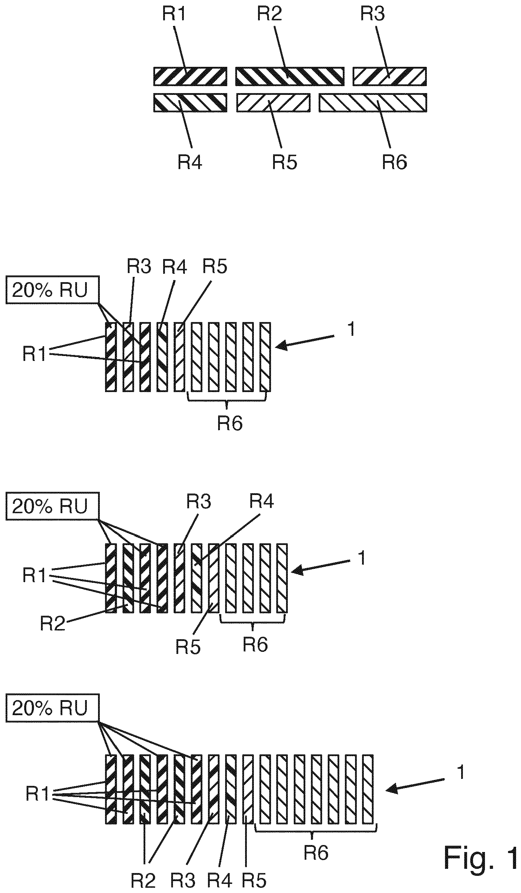

The illustration of Figure 1 is based on the assumption that 20% (rounded up - RU) of the battery cells in a corresponding battery cell module (as called "cell module" or simply "module") are triggered. This is shown in Figure 1 for three cases, i.e., 10 cells per module (or "sub-pack"), 11 cells per module, and 16 cells per module. The individual cells are designated in Figure 1 with the reference numeral 1. Not all cells are explicitly designated.

Reference signs R1 to R6 denote different risk levels for triggering: R1 denotes triggered cells 1; R2 denotes cells 1 that have a very high triggering risk; R3 denotes cells 1 that have a high triggering risk; R4 denotes cells 1 that have a medium triggering risk; R5 denotes cells 1 that have a low triggering risk; and R6 denotes cells 1 that have a very low triggering risk. It can be seen that the risk of cells 1 triggering simultaneously decreases with lower number of cells 1 per module.

According to Figure 1, a number of ten (10) cells 1 per module can be regarded as an optimal value.

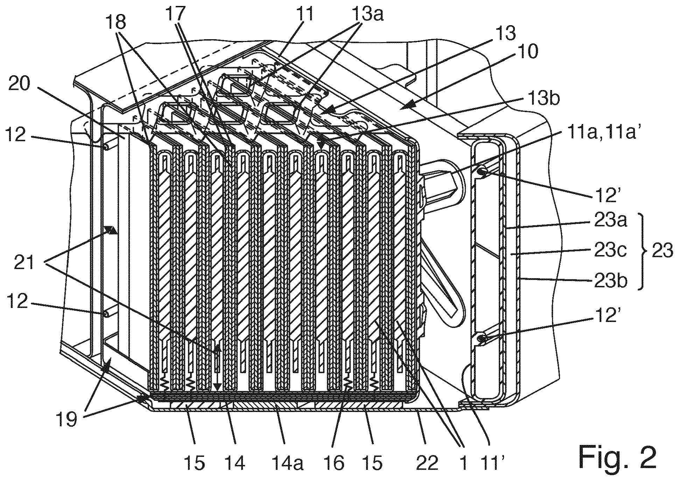

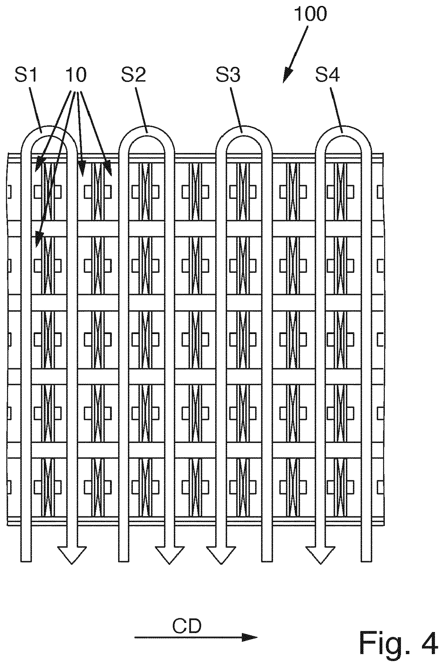

Figure 2 shows in a sectional view the basic structure of a battery cell module, which module as a whole is provided with the reference numeral 10. Ten flat battery cells 1 in the form of so-called pouch cells are arranged in the module 10 in the form of a stack. The stack is held together by two compression plates 11 made of, e.g., CFRP (Carbon Fibre Reinforced Polymer) or materials having similar properties, which are held together on both sides of the stack by two compression rods 12, which can only be seen on one side of the assembly due to the chosen method of representation. A cell compression direction (cf. Figure 4) runs parallel to said compression rods 12. Compression rods 12 serve as a form of compression means operable in said cell compression direction for to hold the stack together between said compression plates 11.

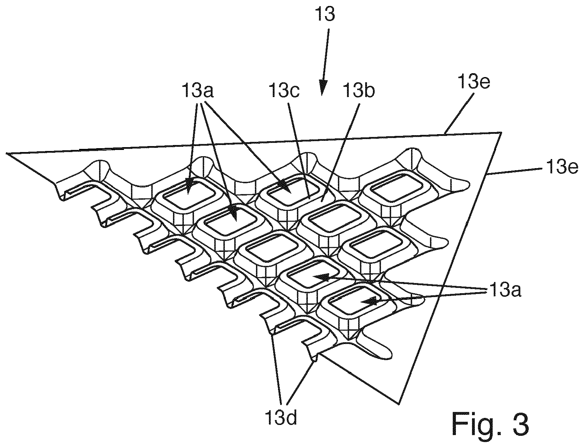

A lid 13 with exhaust holes 13a is arranged above the stack, the exact design of which will be discussed in more detail below with reference to Figure 3. Reference numeral 13b indicates a shortest path from a battery cell 1 to an exhaust hole 13a.

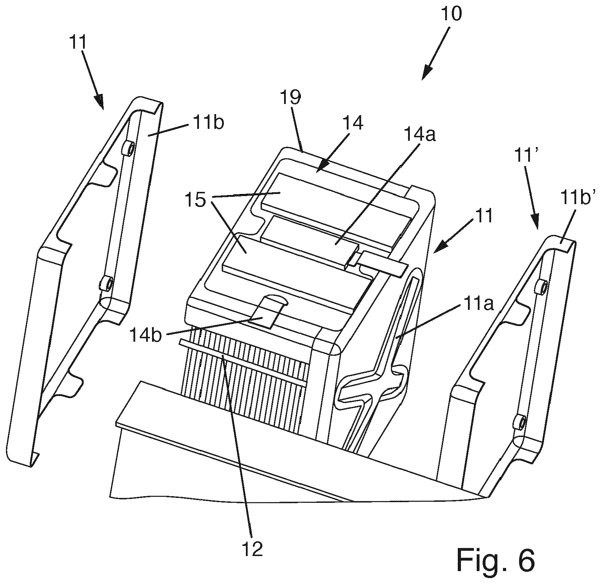

Below the stack is an electric circuit arrangement in the form of a printed circuit board (PCB) 14 with corresponding battery cell management electronics 14a, which can be seen better in Figure 6. Elements 15 made of a phase change material (PCM) are arranged laterally next to the electronics 14a. These elements 15 are thermally conductively connected to the individual battery cells 1 via flexible connections 16 (so-called cell tabs).

Two layers 17 of a compressible aerogel are arranged between each pair of battery cells 1, between which aerogel layers 17 a layer 18 of phase change material (PCM) is arranged in turn. At the end faces of the stack, adjacent said compression plates 11, there is again a layer 17 of aerogel followed by a layer 18 of phase change material.

A separation/insulating layer 19 is arranged between the printed circuit board 14, i.e., the circuit arrangement and the stack of battery cells 1, which separation/insulating layer 19 separates the battery cell stack from the electronics 14a and the printed circuit board 14 both thermally and mechanically.

The separation/insulating layer 19 can take the form of a sandwiched electrically non-conductive panel (e.g., a woven ceramic) including an insulating material (e.g., an aerogel) encapsulating a PCM layer, which PCM layer can absorb high temperature residual heat. The separation layer 19 has through-holes (not shown) through which pass said cell tabs 16.

Reference numeral 20 denotes a burstable anti flame sleeve made of high strength, low weight, non-conductive material, and reference numerals 21 denote thermal runaway clearances for easy degassing in the case of a thermal event in order to avoid the fire impacting other neighbouring components and/or bursting of the triggered cell.

Underneath the electronics 14a and the PCM elements 15, a cooling plate 22 is arranged for additional cooling action.

Reference numerals 11' and 12', respectively, denote a compression plate and a compression rod of a neighbouring cell module.

The compression plates 11, 11' have high inertia ribs 11a, 11a' to increase stiffness.

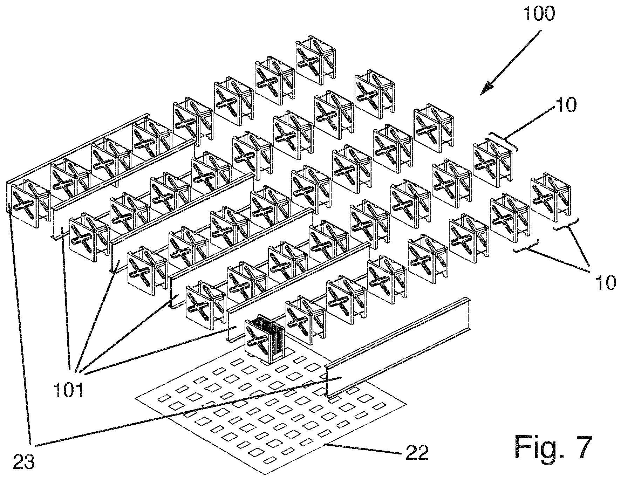

As will be further shown in Figure 7, a plurality of cell modules 10 are surrounded by U-shaped sidewalls 23, which sidewalls are devised as high strength low weight double walls made of a sandwich composed of an inside wall 23a which serves as fire resistance wall and can be coated with CFRP (Carbon Fibre Reinforced Polymer) or Ceramic Fibre Reinforced Polymer, while an outer wall 23b is devised as a structural thin layer. A space 23c between said walls 23a, 23b can be filled with a thermal insulation material, e.g., aerogel or a combination of PCM and aerogel, or can be evacuated.

Figure 3 shows the lid 13 of Figure 2. As already mentioned, said lid 13 has a plurality of exhaust holes 13a, the edges 13b of which are each bulged or angled outwardly, and they are each flattened plateau-like at their free ends 13c.Between and around the exhaust holes 13a, bi-directional channels 13d of V-shaped cross-section extend in a square pattern. Reference numeral 13e marks adhesive edges for adhering a bursting foil, which foil is not shown in Figure 3. In this way, an arrangement can be created in which the bursting foil easily bursts or tears in the event of overpressure on the underside of the lid 13, while it is relatively stable in the opposite direction due to an abutment against the edges 13b, 13c of the exhaust holes 13a. Said bursting foil is preferably made of a polymer reinforced with glass fibre.

Alternatively, said bursting foil (or a plurality of small bursting foil pieces) could be adhered to said plateau-like free ends 13c of the exhaust holes 13a.

Figure 4 shows a battery cell arrangement 100 composed of a plurality of cell modules 10 assembled in a planar configuration of rows and columns as an example of one of the possibilities to connect the cell modules 10 (cf. Figure 2). By way of example, Figure 4 shows an arrangement of cell modules 10, each of which cell modules 10 comprises ten (10) battery cells that are connected in series within a given cell module 10, thus forming a 100S1P configuration that is physically arranged in U-shape, as shown by each one of arrows S1-S4 in the Figure 4. These 100S1P configurations are then connected in parallel, for example four (4) times, to form a 100S4P configuration as shown in Figure 4. Assume the compression direction CD being horizontal (left to right), as shown. Individual battery cells (not shown) are connected via the PCB (Figure 2) which can be easily modified or designed to incorporate power wiring and slave components. Therefore, the modules 10 can be connected in direction CD of the compression of the cells or perpendicular to this direction, as shown in Figure 4.

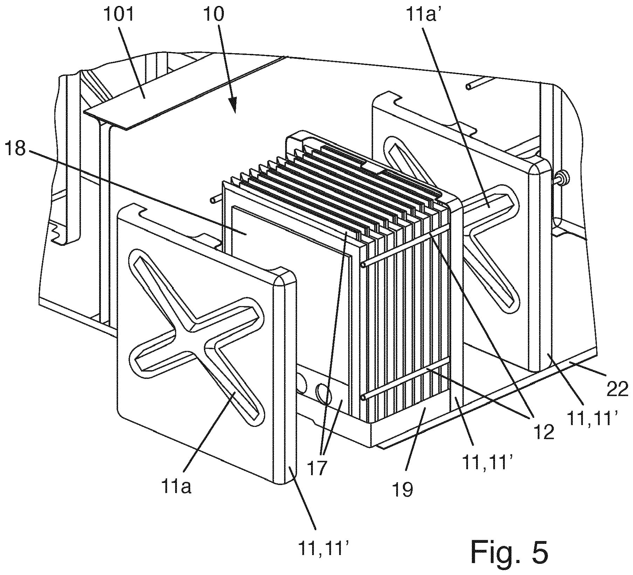

Figure 5 once again shows the basic structure of a single battery cell module 10 in an exploded view. The individual compression plates 11, 11' with their respective reinforcing ribs 11a, 11a' and the compression rods 12, 12' can be seen particularly well. It can also be seen in Figure 5 that the compression plates 11, 11' have bent or angled edges 11b, 11b' with which they partially surround the battery cell stacks laterally.

In addition, Figure 5 shows an intermodule wall 101 of H-shape separating adjacent rows of battery cell modules 10. Said intermodule wall 101 can further be devised in analogy to the sidewalls 23 described earlier in connection with Figure 2.

Figure 6 shows a single battery cell module 10 in another representation with a view of the circuit board 14 on its underside (cf. Figure 2) together with the electronics 14a. Two PCM elements 15 can also be seen, cf. Figure 2. The two compression plates 11 belonging to the module 10 are also shown, together with a further compression plate 11' belonging to an adjacent module (not shown in its entirety). At the lower edge of the figure, an intermediate module wall or a side wall is depicted.

As can further be gathered from Figure 6, the printed circuit board 14 or the corresponding circuit arrangement has various terminal lugs 14b which serve to supply the module 10 with electrical power and/or electrical signals. As has already been noted, the various terminal lugs 14b serve to interconnect the individual modules 10 in various ways, in particular in the direction of compression or perpendicular thereto, cf. Figure 4.

The whole pack is finally enclosed and held in place by the lid 13 (cf. Figure 3), the sidewalls 23, the intermodule wall 101 and the cooling plate 22 via adhesive and/or detachable connectors (e.g., screws) as shown in Figure 7, which shows the mechanical containment structure of a battery cell arrangement 100 (i.e., without said battery cells and without said lid) in an exploded view.

## Claims

1. A battery cell module (10), comprising:
a plurality of flat battery cells (1) arranged side by side in a stack;
a layer of a compressible aerogel (17) between at least two of said battery cells (1);
at least one layer of phase change material (18), PCM;
a circuit arrangement with battery cell management electronics (14a) in operative connection with said plurality of battery cells (1);
at least two compression plates (11) arranged on opposite sides of said stack;
compression means (12) operable in a cell compression direction (CD) to hold said stack together between said compression plates (11); and
a separation layer (19) arranged between said stack and said circuit arrangement.

2. The battery cell module (10) according to claim 1, wherein there is a limited number, n, of battery cells (1) within said battery cell module (10), preferably n <= 20, more preferably n <= 15, most preferably n = 10.

3. The battery cell module (10) according to claim 1 or 2, wherein two layers of aerogel (17) are located between every pair of battery cells (1), preferably one additional layer of aerogel (17) being located between an outmost battery cell (1) in said stack and an adjacent compression plate (11).

4. The battery cell module (10) according to any one of claims 1 through 3, wherein the compression plates (11) are held together by compression rods (12), preferably at least two compression rods (12) on each side of said stack.

5. The battery cell module (10) according to any one of claims 1 through 4, wherein a layer of PCM (18) is arranged between every pair of battery cells (1), preferably between the two layers of aerogel (17) according to claim 3, preferably one additional layer of PCM (18) being located between an outmost battery cell (1) and an adjacent compression plate (11).

6. The battery cell module (10) according to any one of claims 1 through 5, wherein said circuit arrangement, preferably in the form of a printed circuit board (14), PCB, is located outside said stack, preferably in a plane parallel to said compression direction (CD).

7. The battery cell module (10) according to any one of claims 1 through 6, wherein said separation layer (19) comprises a layer of thermo-mechanical insulation between said stack and said circuit arrangement, preferably in the form of a sandwiched electrically non-conductive panel, for example ceramic woven, including an insulating material, for example an aerogel, encapsulating a PCM layer.

8. The battery cell module (10) according to any one of claims 1 through 7, wherein said separation layer (19) has through-holes through which pass cell tabs (16), which cell tabs (16) operatively connect respective battery cells (1) with the circuit arrangement, and wherein said separation layer (19) is preferably coated with a fire barrier coating.

9. The battery cell module (10) according to claim 8, wherein a PCM layer (15) is arranged in or on said separation layer (19), in contact with said cell tabs (16).

10. The battery cell module (10) according to any one of claims 1 through 9, wherein said PCM layer (15) has two phase change temperatures, one being used for low temperatures, preferably around 55°C, and another for high temperatures, preferably around 100°C.

11. The battery cell module (10) according to any one of claims 1 through 10, wherein a lid (13) is located outside said stack, preferably in a plane parallel to said compression direction (CD), more preferably opposite said circuit arrangement of claim 6, said lid (13) having a plurality of holes (13a).

12. The battery cell module (10) according to claim 11, wherein an outer surface of said lid (13) is covered with a film, preferably a glass fibre reinforced polymer film, GFRP.

13. The battery cell module (10) according to claim 11 or 12, wherein said lid (13), in a cross-section thereof, has bi-directional corrugated channels (13d) that extend between said holes (13a), preferably V-shaped channels.

14. A battery cell arrangement (100), comprising a plurality of battery cell modules (10) according to any one of claims 1 through 13.

15. The battery cell arrangement (100) according to claim 14, wherein said battery cell modules (10) are arranged in a planar configuration of rows and columns, wherein in every row said battery cell modules (10) are in contact with an adjacent battery cell module (10) via a respective compression plate (11, 11'), and wherein adjacent rows are separated from each other by an intermodule wall (101), preferably of H-shape, with outside rows being separated from the exterior by respective sidewalls (23), preferably of U-shape.

16. The battery cell arrangement (100) according to claim 14 or 15, wherein a cooling plate (22) is arranged at least on one side parallel to a plane of said rows and columns, preferably in contact with said circuit arrangement of claim 6 and/or said PCM layer (15) of claim 9.
